Europäisches Patentamt

(19) European Patent Office

Office européen des brevets

(11) Numéro de publication: **0 318 402**
A1

## (12) DEMANDE DE BREVET EUROPEEN

(21) Numéro de dépôt: **88420389.4**

(22) Date de dépôt: **18.11.88**

(51) Int. Cl.⁴: **B 23 C 3/05**
B 24 B 15/02, B 23 B 41/06

(30) Priorité: **25.11.87 FR 8716609**

(43) Date de publication de la demande:
**31.05.89 Bulletin 89/22**

(84) Etats contractants désignés:
**AT BE CH DE ES FR GB GR IT LI LU NL SE**

(71) Demandeur: **SOCIETE D'ETUDE ET DE REALISATION ET DE DIFFUSION INDUSTRIELLES SERDI S.A.**
**Avenue des Vieux Moulins 23**
**Annecy (Haute-Savoie) (FR)**

(72) Inventeur: **Gerard, Daniel**
**81 Rue de Romagny**
**F-74100 Annemasse (FR)**

**Tenand, Fernand**
**3 Rue Louis Armand**
**F-74000 Annecy (FR)**

(74) Mandataire: **Guerre, Dominique et al**
**CABINET GERMAIN et MAUREAU Le Britannia Tour C 20**
**Bd E. Deruelle**
**F-69392 Lyon Cédex 03 (FR)**

(54) Broche porte-outil pour machine d'usinage de précision, notamment pour machine à rectifier les sièges de soupape de moteurs thermiques.

(57) La présente invention concerne une broche porte-outil pour machine d'usinage de précision, notamment pour machine à rectifier les sièges de soupape de moteurs thermiques.

Selon l'invention, on dispose un dispositif (50) anti-vibratoire, distinct de l'outil de coupe (4), de manière rapportée et amovible à l'extrémité libre de la broche (1). Ce dispositif comporte un patin (10) disposé à l'opposé de l'outil de coupe (4), par rapport à l'axe de déplacement de la broche (1), et ce patin comporte lui-même une face (11) d'appui sur la surface (6) à usiner, déjà ébauchée mais à finir.

FIG.1

EP 0 318 402 A1

Bundesdruckerei Berlin

## Description

## BROCHE PORTE-OUTIL POUR MACHINE D'USINAGE DE PRECISION, NOTAMMENT POUR MACHINE A RECTIFIER LES SIEGES DE SOUPAPE DE MOTEURS THERMIQUES

De manière générale, l'invention concerne une broche porte-outil pour machine d'usinage de précision. D'une manière particulière, et donc non exclusive, l'invention concerne une broche porte-outil pour machine à rectifier les sièges de soupape de moteurs thermiques, par exemple moteurs à combustion à essence.

Par "machine", on entend tout dispositif, équipement, ou système, allant de l'outillage à main, et par conséquent léger, à la machine-outil, et par conséquent massif et lourd.

L'invention est maintenant introduite, expliquée, décrite et définie par référence à une machine pour rectifier les sièges de soupape, étant entendu encore une fois qu'elle peut s'appliquer à toute autre machine d'usinage de précision.

Selon le brevet européen EP-C-0022796 dont la description est intégrée en cas de besoin à la présente demande de brevet, on a décrit une broche porte-outil, asservie à une table ayant un déplacement horizontal selon deux axes, et dans laquelle la broche est apte à coulisser dans un fourreau pourvu d'une noix sphérique d'orientation portée par un coussin d'air. Cette broche présente à son extrémité libre ou nez, un porte-outil auquel est fixé l'outil de coupe, et une tige coaxiale destinée à être introduite dans le guide de la soupape dont on veut rectifier le siège. Grâce à la sustentation par coussin d'air, la broche et plus précisément la tige-pilote peuvent s'incliner, se centrer librement et automatiquement avec une grande précision dans l' axe réel du guide de soupape.

Cette broche permet d'obtenir, non seulement une bonne coaxialité du siège de soupape avec l'axe du guide, mais aussi un bon état de surface du siège.

Ceci étant, lors de la passe de finition de la surface à rectifier, et par conséquent après la passe d'ébauche de cette dernière, on obtient souvent une surface à facettes. Ceci résulte du phénomène de "broutement" ou "broutage" de l'outil de coupe à arête tranchante, bien connu des spécialistes et techniciens du travail des métaux.

Ce phénomène a été souvent étudié au plan général. Dans le cas présent, on a trouvé que le broutage résulte pour partie des efforts exercés sur la broche, ou l'ensemble broche/porte-outil, en réaction à l'effort exercé pendant l'usinage par la pièce à rectifier. Ces efforts varient de manière périodique à la manière de vibrations, et conduisent, toujours de manière périodique, à un déplacement de la broche par rapport à sa position initiale fixée par la tige pilote dans le guide de soupape, et/ou à une flexion de la broche, de l'ensemble broche/porte-outil, ou de toute autre partie ou constituant fonctionnel de la machine.

Les solutions traditionnelles permettant de contrecarrer les flexions et déplacements notés précédemment pour une machine de rectification, et passant souvent par l'adjonction de masses supplémentaires, n'apparaissent pas appropriées, en particulier si on veut conserver à la machine un usage pratique et maniable.

La présente invention a pour objet, de manière générale une broche porte-outil pour machine d'usinage de précision, permettant d'obvier le phénomène de broutement, sans modifier l'essentiel de la construction de la machine, et en particulier sans recourir à l'adjonction de masses importantes sur tout ou partie de la machine.

A titre particulier, l'invention vise une broche porte-outil pour machine à rectifier les sièges de soupape, du type comportant une broche proprement dit présentant à son extrémité libre ou nez :
- d'une part, un porte-outil auquel est fixé l'outil de coupe proprement dit,
- une tige pilote, coaxiale à l'axe de déplacement en translation ou rotation de la broche, destinée à être introduite dans le guide de la soupape dont on veut rectifier le siège.

La broche selon l'invention se caractérise en ce qu'un dispositif anti-vibratoire, distinct de l'outil de coupe, est rapporté de manière amovible à l'extrémité libre de la broche, et comporte un patin disposé à l'opposé de l'outil de coupe par rapport à l'axe de déplacement de la broche, ledit patin comportant une face d'appui sur la surface à usiner, ébauchée mais à finir.

Un dispositif anti-vibratoire selon l'invention coopère avec la broche porte-outil de la manière suivante.

Lorsque l'outil de coupe arrive en phase de finition, c'est-à-dire après la phase d'ébauche ayant permis l'essentiel de l'usinage ou rectification, on rapporte et fixe le dispositif anti-vibratoire, par rapport à l'outil de coupe, comme défini précédemment, c'est-à-dire, d'une part avec le patin disposé à l'opposé de l'outil de coupe, et d'autre part avec la face d'appui du patin au contact de la surface à finir.

Lors de la phase de finition, le dispositif anti-vibratoire, et plus précisément son patin créent, au niveau du nez de la broche, une force opposée à l'effort exercé sur l'ensemble outil/porte-outil en conséquence de l'usinage. Cette force précontraint la broche par rapport à sa position ou flèche initiale, c'est-à-dire au début de la phase de finition. Et cette précontrainte amène l'outil de coupe au contact étroit et permanent avec la surface à finir.

Ainsi, la tension exercée sur le patin en appui sur la surface à usiner par exemple le siège à rectifier, est supérieure à l'effort de l'outil de coupe. Il s'ensuit que cet outil ne refuse plus alors la coupe et reste constamment au contact étroit de la surface à finir. Il n'y a plus de vibrations, donc plus de brouttements, donc plus de facettes.

Par dispositif anti-vibratoire amovible et rapporté, on entend aussi bien un dispositif monté à demeure sur la broche porte-outil, qu'un dispositif séparé de la broche, mais pouvant être monté sur cette dernière, au moment de la passe de finition.

La manière dont l'invention peut être réalisée et les avantages qui en découlent ressortiront mieux de l'exemple de réalisation qui suit, donné à titre indicatif mais non limitatif, à l'appui des dessins annexés, dans lesquels :

- la figure 1 est une représentation schématique de la broche porte-outil caractéristique de l'invention ;

- la figure 2 est une vue sommaire de cette broche, avec le dispositif anti-vibratoire escamoté, et l'outil de coupe au contact du siège à rectifier, pendant la passe d'ébauche de la rectification.

- la figure 3 est une représentation vue de dessus du dispositif anti-vibratoire caractéristique de l'invention ;

- la figure 4 montre en coupe transversale la position du dispositif anti-vibratoire, et celle de l'outil de coupe, par rapport à la pièce à rectifier, au départ de la passe de finition, c'est-à-dire avant rotation de la broche ;

- la figure 5 montre en coupe transversale la position du dispositif anti-vibratoire et celle de l'outil de coupe pendant la passe de finition ;

- la figure 6 représente de manière schématique un mode d'exécution particulier d'un dispositif anti-vibratoire selon l'invention.

De manière connue en soi, et en particulier par référence au brevet européen EP-C-0022796, la broche (1) est susceptible, d'une part de tourner autour de son axe, dans le sens de rotation indiqué par la flèche (A), et d'autre part de se déplacer en translation, de haut en bas ou de bas en haut, comme indiqué par la flèche (B).

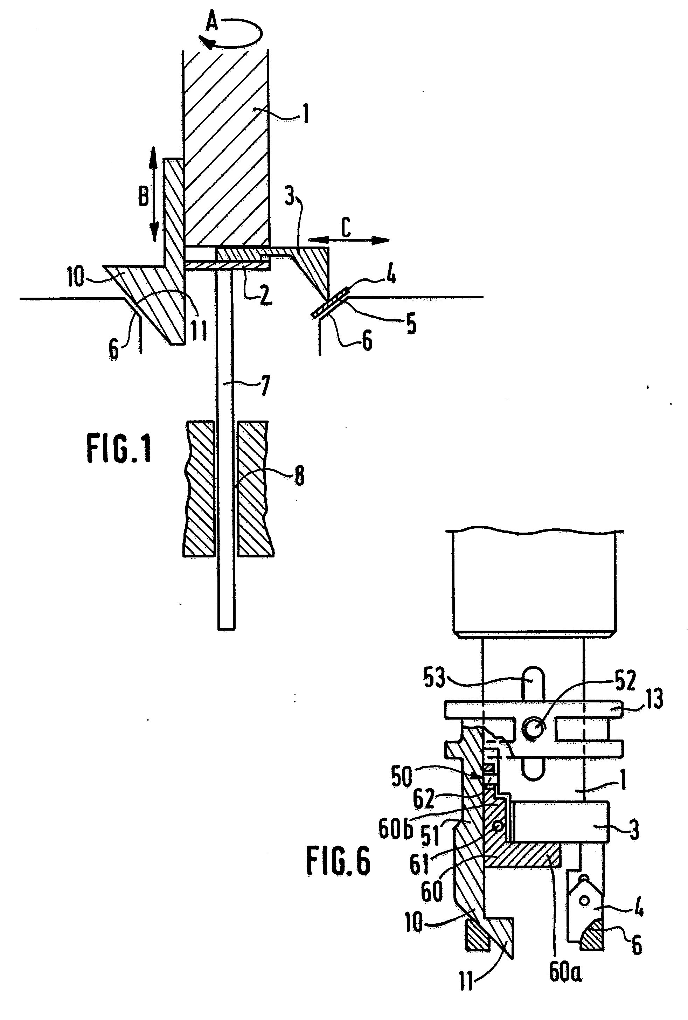

L'extrémité libre (2), ou nez de la broche (1), présente un porte-outil (3), amovible par rapport à ladite broche, par exemple coulissable horizontalement comme indiqué par la flèche (C) sur la figure 1. A l'extrémité de ce porte-outil est fixé l'outil (4) de coupe proprement dit, dont l'arête tranchante (5) est destinée à usiner le siège (6) de la soupape à rectifier. L'extrémité libre (2) de la broche (1) comporte une tige pilote (7) coaxiale, destinée à être introduite dans le guide (8) de la tige de soupape. De manière non représentée, mais comme déjà décrit dans le brevet EP-C-0022796, la broche coulisse dans un fourreau à noix sphérique sustenté sur coussin d'air.

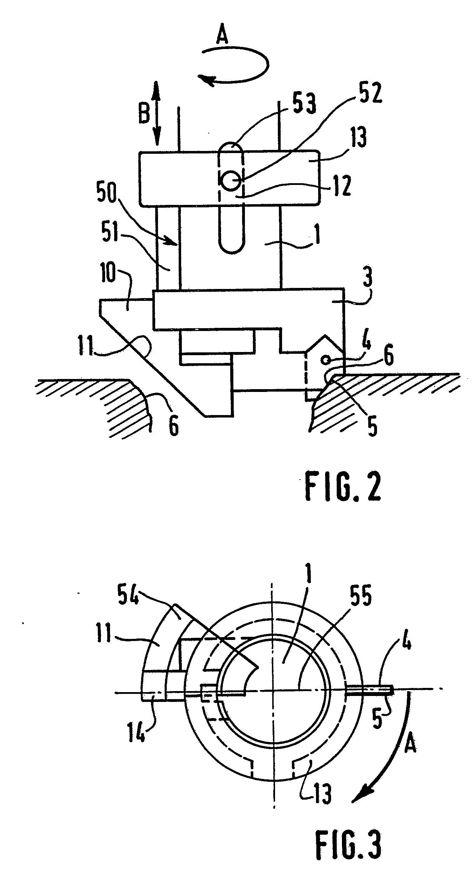

Par référence aux figures 2 et 3, le dispositif anti-vibratoire (50) est rapporté sur le nez de la broche (1), monté à demeure sur ce dernier, tout en demeurant distinct de l'outil de coupe (4). Il peut néanmoins coulisser sur l'extrémité libre (2) de la broche (1), selon la direction de la flèche (B), tout en pouvant être fixé fermement en position, et ce par des moyens appropriés décrits ci-après. Avantageusement, mais de manière non exclusive, ce patin est réalisé en bronze, métal dont le coefficient d'usure est en général supérieur à celui du siège (6), de manière à ne pas détruire ce dernier, mais dont le coefficient de frottement autorise par ailleurs un excellent glissement par rapport à ce même siège, de manière à ne pas laisser de trace pendant la phase de finition.

Ce dispositif comporte d'une part un corps (13) ayant la forme d'une bague ajustée à la section extérieure de l'extrémité libre (2), ou nez de la broche (1), un patin (10) situé au-dessous du corps (13), et une paroi intermédiaire (51), cylindrique, reliant le corps (13) et le patin (10) ; l'ensemble de ces parties est en général obtenu par moulage sous pression, de manière monobloc.

La bague (13) comporte un orifice pour le passage d'une vis (52), coopérant avec une lumière (53) allongée selon l'axe de la broche, le tout permettant une fixation du dispositif (50) selon la direction de la flèche (B) sur la broche (1).

Le patin (10) constitue la partie active du dispositif anti-vibratoire, et comporte dans un plan de section passant par l'axe de la broche, une forme approximativement triangulaire, dont un côté est disposé selon la direction transversale de la surface à rectifier. Ce patin est disposé à l'opposé de l'outil de coupe (4), par rapport à l'axe de déplacement de la broche, et il comporte une face d'appui (11) sur la surface (6) à usiner, ébauchée mais à finir comme décrit ci-après. Comme montré par la figure 3, c'est-à-dire en considérant un plan de section perpendiculaire à l'axe de la broche (1), le patin (10) ou la surface d'appui (11) détermine un secteur circulaire (54), s'étendant angulairement pour l'essentiel à l'arrière du plan axial (55) passant par l'arête tranchante (5) de l'outil de coupe (4), et ceci par rapport au sens (A) de la rotation en usinage de la broche (1). Toujours par une observation dans le sens de la rotation (A) en usinage, la bordure avant (14) de la surface d'appui (11) est décalée en avant par rapport au plan axial (55) précité, c'est-à-dire celui passant par l'arête tranchante (5) de l'outil de coupe (4). Préférentiellement, selon le sens (A) de la rotation en usinage, la bordure avant est disposée selon un angle compris entre 175 et 180°, préférentiellement de l'ordre de 177°, par rapport au plan axial (55). Comme le montre la figure 3, le secteur circulaire (54), selon lequel la face d'appui (11) épouse la forme de la surface (6) à usiner, fait approximativement un angle compris entre 15 et 30°.

Comme représenté à la figure 6, les moyens de blocage positif du porte-outil (3) sont associés à l'extrémité libre (2) de la broche (1). Ces moyens comportent un étrier (60) de blocage, articulé autour d'un axe (61) sécant à l'extrémité libre (2) de la broche (1) ; cet étrier comporte deux parties à angles droits, formant leviers autour de l'axe (61), une première partie (60a) perpendiculaire à l'axe de la broche, prenant appui sur la face inférieure du porte-outil (3), et une deuxième partie (60b) allongée selon l'axe de la broche, comportant à son extrémité une vis de blocage (62). Cette vis de blocage prend appui sur la broche (1), et peut être actionnée par l'extérieur du dispositif anti-vibratoire, grâce à une fente longitudinale non représentée, disposée dans la partie intermédiaire (51) du dispositif, donnant accès à la tête de la vis (62). Par vissage de la vis (62), on peut donc prendre appui sur la broche (1), et bloquer positivement le porte-outil (3), par la partie (60a) de l'étrier.

Ces moyens de blocage positif permettent d'avoir une position stable du porte-outil (3) pendant la phase de finition, moyennant quoi le dispositif (50) anti-vibratoire pallie uniquement aux vibrations dûes à la coupe de l'outil (4).

Le mode de fonctionnement du dispositif anti-vibratoire est maintenant décrit.

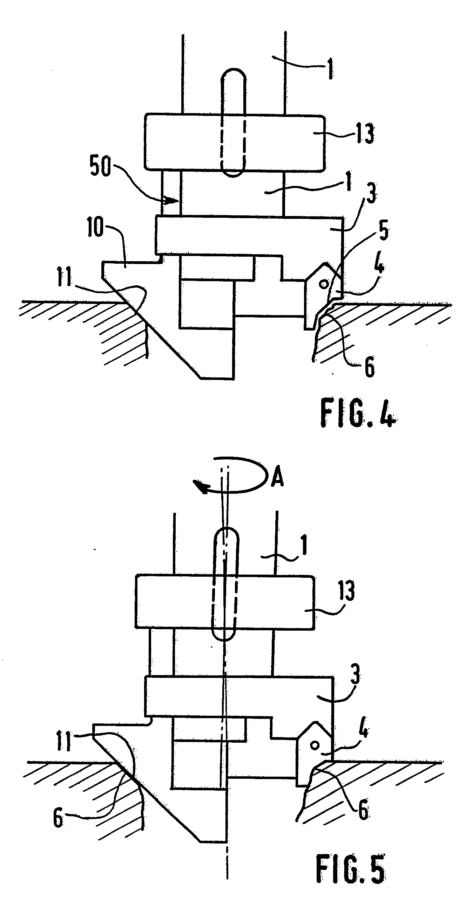

Lors de la rectification, c'est-à-dire pendant la passe d'ébauche, conformément à la figure 2, le dispositif anti-vibratoire (50) est escamoté, c'est-à-dire positionné fermement sur la broche (1) dans une position lui interdisant tout contact de la surface d'appui (11) avec le siège (6). Lorsqu'on arrive à la fin de la passe d'ébauche, l'opérateur constate un léger brouttement, et il arrête en conséquence la rotation selon la flèche (A) de la broche (1). On effectue alors deux opérations distinctes. D'une part, on relève la broche (1) de manière à disposer d'un interstice entre la surface (6) et l'arête tranchante (5) de l'outil (conférer figure 4), et d'autre part, on positionne et fixe le dispositif anti-vibratoire (50) vers le bas, jusqu'à ce que la face d'appui (11) du patin (10) soit en contact étroit avec le siège (6).

Alors peut commencer la passe de finition, en remettant la broche (1) en rotation lente, toujours selon le sens (A), et conformément à la figure 5. A ce moment, la broche (1) se trouver pré-contrainte, sous l'effet de l'effort consécutif au contact de la surface d'appui (11) avec le siège (6), et l'outil de coupe (4) vient au contact du siège rectifié (6), ce qui évite tout phénomène de vibrations, brouttements, et consécutivement toute formation de facettes. La phase de finition peut donc s'effectuer dans de très bonnes conditions, et permet d'enlever quelques centièmes de métal, sans brouttement.

## Revendications

1/ Broche porte-outil pour machine d'usinage de précision, notamment pour machine à rectifier les sièges de soupape de moteurs thermiques, comportant, outre la broche (1) proprement dite, un outil de coupe fixé en rotation à l'extrémité libre ou nez (2) de ladite broche **caractérisée** en ce qu'un dispositif (50) anti-vibratoire distinct de l'outil de coupe, est rapporté de manière amovible à l'extrémité libre (2) de la broche, et comporte un patin (10), disposé à l'opposé de l'outil (4) de coupe par rapport à l'axe de déplacement de la broche, ledit patin comportant une face (11) d'appui sur la surface (6) à usiner, ébauchée mais à finir.

2/ Broche selon la revendication 1, caractérisée en ce que observée dans un plan de section perpendiculaire à l'axe de la broche, la face d'appui (11) détermine un secteur circulaire (54) s'étendant angulairement pour l'essentiel, à l'arrière du plan (55) axial passant par l'arête tranchante (5) de l'outil de coupe (4), dans le sens (A) de la rotation en usinage de la broche.

3/ Broche selon la revendication 2, caractérisée en ce que selon le sens (A) de la rotation en usinage de la broche, la bordure avant (14) de la surface d'appui (11) est décalée en avant par rapport au plan axial (55) passant par l'arête tranchante (5) de l'outil de coupe.

4/ Broche selon la revendication 3, caractérisée en ce que, selon le sens (A) de rotation en usinage de la broche, la bordure avant (14) est disposée selon un angle compris entre 175° et 180° par rapport au plan (55) axial passant par l'arête tranchante (5) de outil de coupe.

5/ Broche selon la revendication 1, caractérisée en ce que le dispositif anti-vibratoire (50) est monté à demeure sur l'extrémité libre (2) de la broche, de manière coulissable selon l'axe de déplacement de la broche.

6/ Broche selon la revendication 2, caractérisée en ce que le secteur circulaire (54) selon lequel la face d'appui (11) épouse la forme de la surface à usiner (6) fait un angle compris entre 15 et 30°.

7/ Broche selon la revendication 1, comportant un porte-outil (3), auquel est fixé l'outil de coupe (4), caractérisée en ce un étrier de blocage (60) est articulé autour d'un axe (61) sécant à l'extrémité libre (2) de la broche, et des moyens (62) de blocage positif de l'étrier, coopèrent avec l'extrémité libre (2) de la broche.

EP 0 318 402 A1

FIG.1

FIG.6

EP 0 318 402 A1

FIG. 2

FIG. 3

EP 0 318 402 A1

FIG. 4

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| A | WO-A-8 001 365 (HARMAND) <br> * page 2; lignes 22-23; figures 1, 2; revendication 1 * <br> --- | 1 | B 23 C 3/05 <br> B 24 B 15/02 <br> B 23 B 41/06 |
| A | DE-C- 240 420 (WESTERHEIDE) <br> * Tout le document * <br> --- | 1,5 | |
| A | US-A-1 923 177 (TUCKER) <br> * Revendications 1, 2; page 1, lignes 94-96; figures 1-3 * <br> --- | 1,5 | |
| A | DE-C- 660 787 (DEUTSCHE EISENWERKE) <br> * Revendication 1; figure * <br> --- | 1 | |
| A | US-A-1 453 643 (SHEARER) <br> * Revendication 1; figures 1-4 * <br> ----- | 1 | |

DOMAINES TECHNIQUES RECHERCHES (Int. Cl.3)

B 23 C   3/00
B 23 B  41/00
B 23 D   1/00
B 24 B  15/00
B 24 B  47/00
B 23 Q
B 23 D  75/00
B 23 D  77/00
B 23 B   5/00
B 23 C   5/00

Le présent rapport a été établi pour toutes les revendications

| Lieu de la recherche | Date d'achèvement de la recherche | Examinateur |
|---|---|---|
| BERLIN | 20-02-1989 | BERNAS Y.N.E. |